# EUROPEAN PATENT APPLICATION

(11) **EP 0 664 634 A1**
(43) Date of publication of application: **26.07.1995**
(21) Application number: 95300283.9
(22) Date of filing: 18.01.1995
(51) Int. Cl.: H04M 3/30

(54) **Subscriber line testing**

(30) Priority: 22.01.1994 GB 9401224
(71) Applicant: NORTHERN TELECOM LIMITED, Montreal, Quebec H2Y 3Y4 (CA)
(72) Inventor: Bleicher, Danny, East Barnet, Herts EN4 8EB (GB)
(74) Representative: Ryan, John Peter William

(57) **Abstract**

In a telecommunications system in which groups of subscribers are served by a local concentrator/multiplexer, the subscriber line testing function is shared between a local unit(13) disposed at the concentrator/multiplexer site and a control or master unit(15) at the exchange. Comunication between the control and local units is effected over a digital channel e.g. over a fibre optic network. The control unit sends test commands and associated test waveforms to the local unit, and analyses the test results returned from te local unit.

## Description

This invention relates to a method of and apparatus for testing subscriber lines in a telecommunications system.

In a conventional telephone system a plurality of subscribers are connected each via a copper-wire loop to a central exchange. Periodic routine testing of the subscriber loop, e.g. to detect faults, is effected by test equipment located at the exchange. This test equipment is relatively costly, but where a large number of subscribers are served, the effective cost per subscriber loop is low.

Systems are now being introduced in which groups of subscribers are connected by copper loops to a local concentrator or multiplexer, the concentrator/multiplexer being coupled to the exchange via an optical fibre network. In such an arrangement there is no direct electrical connection between the subscriber and the exchange. If a conventional loop test equipment were to be provided at each concentrator/multiplexer site then the cost per subscriber would be prohibitive. One approach to this problem is to provide the test equipment at the central exchange and to provide an additional wired connection, in parallel with the optical fibre network, to each concentrator/multiplexer site. Such an arrangement however adds to the complexity and cost of the system and, to some extent, negates the benefit of fibre optic transmission.

One form of subscriber line testing apparatus is described in specification No. WO 86/02796.

A further approach to this problem is described in our specification No. 2 269 073. In this arrangement a simple low cost test device is provided on each subscriber line at each remote concentrator/multiplexer site.

According to the invention there is provided remote monitoring arrangement for use in a telecommunications system in which groups of subscribers are coupled via local concentrators/multiplexers and an optical fibre network to a central exchange, there being a conductive loop between each subscriber and the respective concentrator/multiplexer, the apparatus including a central unit associated with the exchange, and local units, one for each said local concentrator/multiplexer, each said local unit being coupled via the optical fibre networks to the central unit, characterised in that the central unit provides command and test signals for each said local unit whereby to effect loop testing, that each said signal is preceded by a single indicator bit, the value of said bit whose value indicates the respective command or test nature of the signal following that bit, and wherein the central unit further includes means for analysing the results of testing by the local units.

According to another aspect of the invention there is provided A local concentrator/multiplexer arrangement for use in a telecommunications system the arrangement including, means for communicating over a digital channel with test control equipment disposed at a central exchange, the communication from the exchange comprising test commands and test signals associated therewith, means responsive to the commands for applying the test signals to subscriber lines coupled to the arrangement, and means for transmitting to the exchange over said digital channel information resulting from the subscriber line testing.

An embodiment of the invention will now be described with reference to the accompanying drawings, in which:-
Fig. 1 is a schematic diagram of a telecommunications network provided with central and local test facilities;
Fig. 2 shows a local test facility for use in the system of Fig. 1; and
Fig. 3 shows a central test facility for use together with the local facility of Fig. 2.

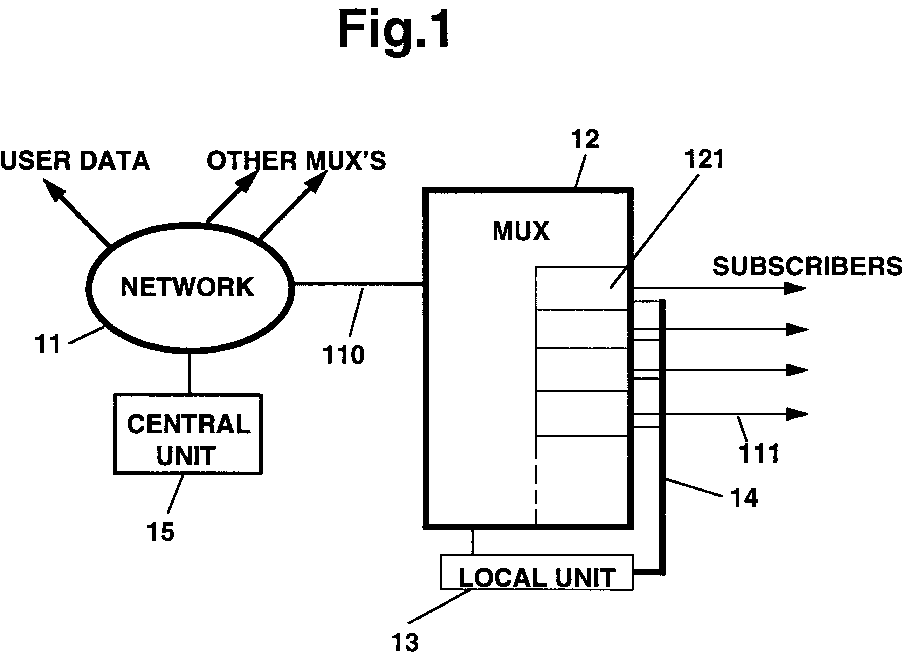

Referring to Fig. 1, a telecommunications system is illustrated in highly schematic form. The system includes a transmission network 11 comprising an optical transmission network associated with a local exchange (not shown). The network is coupled via fibre optic paths 110 to a number of local concentrators/multiplexers 12 each of which serves a group of subscribers each via a respective subscriber loop 111, e.g. a copper twisted pair. Each subscriber loop 111 is terminated on a corresponding line card 121 disposed in the concentrator/multiplexer 12. Testing of the subscriber loop 111 is effected via a local test unit 13 coupled to the line cards 121 via a test bus 14.

Control of the local test unit 14 is effected via central test unit or test head 15 associated with the exchange (not shown) and coupled to the local unit via an access channel on the optical fibre path 110, this path also carrying user channels and supervisory channels from the concentrator/multiplexer. Typically these channels are 64Kbit/sec channels. The link between the central unit and the local unit can be assigned as a dedicated link, as for example in a point-to-point MUX network configuration. Alternatively, the link can be assigned for the test duration and then reassigned on completion of the test as for example in a concentrator PON network.

The fibre optic path 110 carries, in digital form, test tones and commands in the forward direction from the central unit 15 and carries test response and status information in the backward direction to the central unit. A coding protocol may be employed to identify e.g. test tones and test commands.

The communication channel is designed to handle the various types of date for the control and monitoring of the test head, sending the various test stimuli to line and monitoring the line reaction to these stimuli. The method described here can be used for other applications where it is necessary to transfer a variety of data types in a limited channel capacity. In the particular example a 64Kb/s channel is used because of its standard nature which enables it to be transferred across the network, but the same technique could be used to other data rates.

The multiplexing between control information and test stimulus is based on a switch code or switch bit which indicates the following information to be of a control nature or test stimulus nature. This is possible because the line testing is done in a sequence of sessions under which a control command is sent to define the following session in terms of gain, connection and nature of the test, followed by sending the test stimulus and monitoring the test response then sending a control command for the next session. On the whole a set of such test sessions support a variety of tests which provide a complete picture of the line under test.

In order to make use of the limited capacity of the data channel, the A/D and D/A (analogue to digital converters) are programmed to support a variety of signal bandwidth and resolution from 14 bit resolution and 2KHz bandwidth up to 2 bit resolution 16 KHz bandwidth. The 14 bit resolution is required to measure accurately the line capacitance in the presence of noise and other line parameters while the 16KHz bandwidth is required for measuring subscriber private meter signals. In between these two extremes the system offers 4KHz bandwidth with 8 bit resolution for normal audio and tone signalling measurements. In the case of 2 bit resolution measurements, use can be made of iterative sessions of variable gain to capture the exact signal amplitude in a method by which time is traded for bandwidth and resolution. An alternative method is to store the high bit rate measurement at the local unit and send the result in an expanded time scale through the channel.

All the above is achieved by the control signals at the beginning of the session setting the A/D, D/A parameters in terms of filter coefficients and bits per sample. This method can be implemented with the use of a variety of A/D, D/A types including sigma delta A/P devices with internal digital signal processing programs to determine the output in terms of signal bandwidth and resolution.

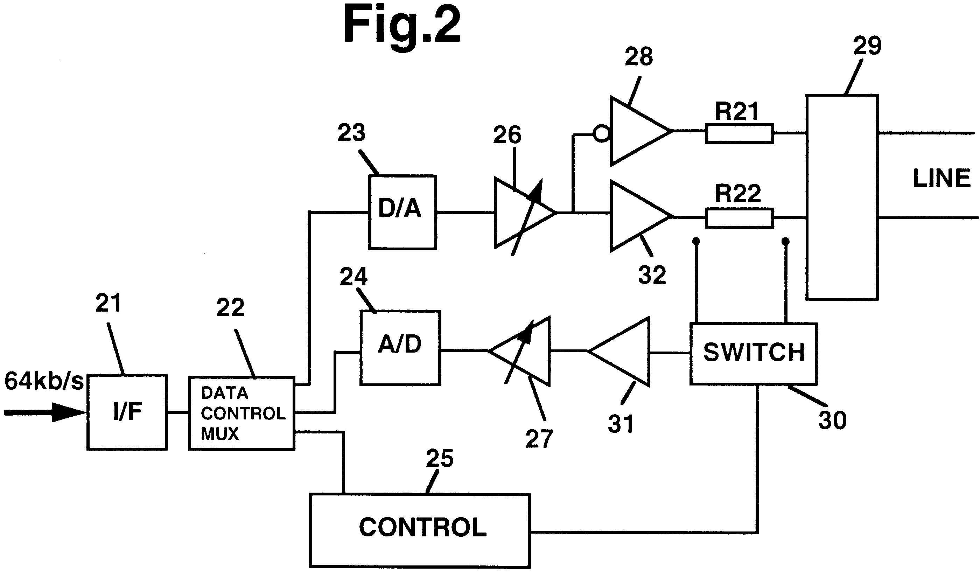

Referring now to Fig. 2, this shows in schematic form the construction of the local test unit (13) of Fig. 1. An interface 21 couples the local unit via a 64 Kbit/sec channel to the central unit 15 (Fig. 1) via the fibre optic network. Signals from the central unit are fed via the interface to a data control multiplexer 22 which routes command signals to a control circuit 25 and test waveforms or tones via a digital-to-analogue converter 23 to the subscriber line under test. The amplitude of the signal applied to the line via line drivers 28 and 32 is determined by a visible gain amplifier 26 whose gain is controlled by the control circuit 25 in response to commands received from the central unit. Access to a particular line is provided by the test bus 29.

Test response signals from the line are fed via an analogue-to-digital converter 24 to the data control multiplexer 22 and the interface 21 for transmission over a 64 Kbit/sec channel to the central unit. The amplitude of the response signal is determined by amplifier 27 whose gain is controlled by the control circuit 25.

The A/D and D/A functions of the local unit may be controlled by the central unit to accommodate a variety of testing protocols, e.g. 14 bit 60HZ signals for capacitance measurement in the presence of noise, 8 bit 4KHz signals for audio test tones, or 2 bit 16 KHz signals for analysis of subscriber private meter signals.

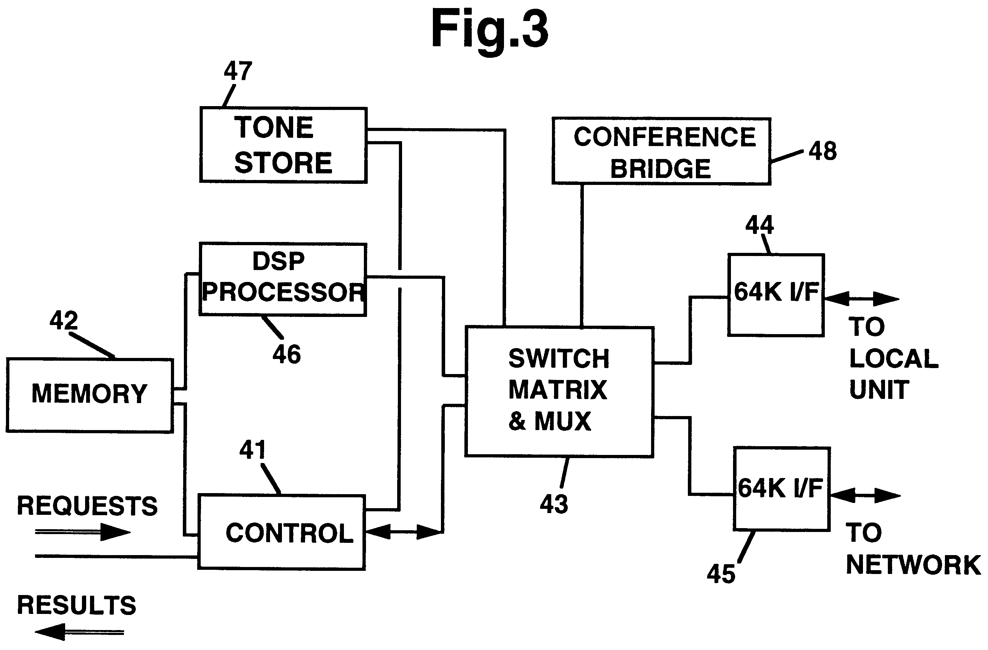

The construction of the central unit is shown in schematic form in Fig. 3. The central unit controls a plurality of local units either sequentially or simultaneously depending on the specific implementation. The unit includes a control circuit 41 and an associated memory 42, the latter containing a set of test routines for a variety of line types, service types and test requests. The memory may also contain a detailed list of the various subscriber lines and their corresponding configuration status. The control circuit 41 controls all the testing activities of each local unit step-by-step by sending to that unit test commands and the associated test waveform of various voltages and frequencies. This information is transmitted on the 64 Kbit/sec channel over the network via a switch matrix/multiplexer 43 and a first interface 44. Communication with other parts of the network is provided via a second interface 45.

The control circuit 25 receives test responses from each local unit and analyses these responses, e.g. by measuring the amplitude and phase of each test waveform. Processing of signals in this way using digital signal processing (DSP) techniques provides information on the line values in terms of voltage, resistance, capacitance. Further information can be obtained on various line terminations and signalling conditions and on various signalling protocols and extraneous conditions. The control unit may analyse both loop-disconnect and tone dialling various signalling messages and tones and a variety of line conditions. This information can then be converted, e.g. from appropriate look-up tables, to pass/fail information.

The control unit interfaces with an operator whereby to respond to test requests and to return the results of those tests either in the form of pass/fail information or in the form of detailed parametric values for further interpretation. The unit can also support interactive testing whereby the operator can converse with a subscriber while monitoring line functionality e.g. to diagnose a faulty instrument from analysis of dial tones/pulses.

## Claims

1. A remote monitoring arrangement for use in a telecommunications system in which groups of subscribers are coupled via local concentrators/multiplexers and an optical fibre network to a central exchange, there being a conductive loop between each subscriber and the respective concentrator/multiplexer, the apparatus including a central unit associated with the exchange, and local units, one for each said local concentrator/multiplexer, each said local unit being coupled via the optical fibre networks to the central unit, characterised in that the central unit provides command and test signals for each said local unit whereby to effect loop testing, that each said signal is preceded by a single indicator bit, the value of said bit whose value indicates the respective command or test nature of the signal following that bit, and wherein the central unit further includes means for analysing the results of testing by the local units.

2. A test apparatus as claimed in claim 1, characterised in that coupling between the control unit and the local unit is effected over an allocated digital transmission channel.

3. A test apparatus as claimed in claim 1, 2 or 3, wherein each local unit includes means for receiving test waveforms and associated commands from the control unit, and wherein each local unit includes means for executing the commands each with its associated test waveform.

4. A telecommunications system incorporating a test apparatus as claimed in any one of claims 1 to 3.

5. A local concentrator/multiplexer arrangement for use in a telecommunications system the arrangement including, means for communicating over a digital channel with test control equipment disposed at a central exchange, the communication from the exchange comprising test commands and test signals associated therewith, means responsive to the commands for applying the test signals to subscriber lines coupled to the arrangement, and means for transmitting to the exchange over said digital channel information resulting from the subscriber line testing.
